# EUROPÄISCHE PATENTSCHRIFT

(11) **EP 3 513 166 B1**
(45) Veröffentlichungstag und Bekanntmachung des Hinweises auf die Patenterteilung: **20.12.2023**
(21) Anmeldenummer: 17757716.0
(22) Anmeldetag: 14.08.2017
(51) Int. Cl.: G01N 15/06, G01N 27/404, G01N 1/22

(54) **SENSORELEMENT ZUR ERFASSUNG VON PARTIKELN EINES MESSGASES IN EINEM MESSGASRAUM**
SENSOR ELEMENT FOR DETECTING PARTICLES OF A MEASURING GAS IN A MEASURING GAS CHAMBER
ÉLÉMENT CAPTEUR POUR LA DÉTECTION DE PARTICULES D'UN GAZ DE MESURE DANS UN ESPACE DE GAZ DE MESURE

(30) Priorität: 16.09.2016 DE 102016217775
(43) Veröffentlichungstag der Anmeldung: 24.07.2019
(73) Patentinhaber: Robert Bosch GmbH, 70442 Stuttgart (DE)
(72) Erfinder: ROESCH, Sabine, 71254 Ditzingen (DE); SCHNEIDER, Jens, 71229 Leonberg (DE); RODEWALD, Stefan, 71254 Ditzingen (DE); VONAU, Corinna, 70469 Stuttgart (DE)
(86) Internationale Anmeldenummer: PCT/EP2017/070620
(87) Internationale Veröffentlichungsnummer: WO 2018/050384

(56) Entgegenhaltungen:
- WO-A1-2015/022167
- DE-A1-102007 047 078
- US-A- 5 215 643
- US-A1- 2002 023 838

## Beschreibung

### Stand der Technik

Aus dem Stand der Technik ist eine Vielzahl von Sensorelementen zur Erfassung von Partikeln eines Messgases in einem Messgasraum bekannt. Beispielsweise kann es sich bei dem Messgas um ein Abgas einer Brennkraftmaschine handeln. Insbesondere kann es sich bei den Partikeln um Ruß- oder Staubpartikel handeln. Die Erfindung wird im Folgenden, ohne Beschränkung weiterer Ausführungsformen und Anwendungen, insbesondere unter Bezugnahme auf Sensorelemente zur Detektion von Rußpartikeln beschrieben.

Zwei oder mehrere metallische Elektroden können auf einem elektrisch isolierenden Träger angebracht werden. Die sich unter Einwirkung einer Spannung anlagernden Teilchen, insbesondere die Rußpartikel, bilden in einer sammelnden Phase des Sensorelements elektrisch leitfähige Brücken zwischen den beispielsweise als kammartig ineinander greifende Interdigitalelektroden ausgestalteten Elektroden und schließen diese dadurch kurz. In einer regenerierenden Phase werden die Elektroden üblicherweise mit Hilfe eines integrierten Heizelementes freigebrannt. In der Regel werten die Partikelsensoren die aufgrund der Partikelanlagerung geänderten elektrischen Eigenschaften einer Elektrodenstruktur aus. Es kann beispielsweise ein abnehmender Widerstand oder ein zunehmender Strom bei konstanter angelegter Spannung gemessen werden.

Nach diesem Prinzip arbeitende Sensorelemente werden im Allgemeinen als resistive Sensoren bezeichnet und existieren in einer Vielzahl von Ausführungsformen, wie z.B. aus DE 103 19 664 A1, DE10 2004 0468 82A1, DE 10 2006 042 362 A1, DE 103 53 860 A1, DE 101 49 333 A1 und WO 2003/006976 A2 bekannt. Die als Rußsensoren ausgestalteten Sensorelemente werden üblicherweise zur Überwachung von Diesel-Partikelfiltern eingesetzt. Im Abgastrakt einer Brennkraftmaschine sind die Partikelsensoren der beschriebenen Art in der Regel in ein Schutzrohr aufgenommen, das gleichzeitig beispielsweise die Durchströmung des Partikelsensors mit dem Abgas erlaubt.

Weitere Sensoren sind aus der US 5,215,643, der DE 10 2007 047 078 A1 und der WO 2015/022167 A1 bekannt.

Trotz der Vorteile der aus dem Stand der Technik bekannten Sensorelemente zur Erfassung von Partikeln beinhalten diese noch Verbesserungspotential. In der Regel ist die Elektrodenstruktur als eine dünne Edelmetallschicht geringer Masse ausgestaltet. Der Verlust geringer Mengen Metall, wie er beispielsweise durch Abbrand entstehen kann, kann zu Funktionsveränderungen und/oder dem Ausfall des Sensorelements führen. Insbesondere werden die Interdigitalelektroden von Partikelsensoren während der sammelnden und der regenerierenden Phase durch unterschiedliche Oberflächenreaktionen belastet und können nicht, wie beispielsweise bei Außenelektroden von Lambdasonden üblich, durch poröse, keramische Schutzschichten geschützt werden. Beispielsweise sind aus DE10 2008 042 770 A1 und DE 103 19 664 A1 ein Material und eine Schutzschicht bekannt, die die Abbrandfestigkeit einer Außenelektrode eines Partikelsensors oder einer anderen Vorrichtung, steigern können. Nach wie vor besteht jedoch noch ein erhebliches Verbesserungspotential hinsichtlich der Robustheit einer Außenelektrode beispielsweise gegenüber hohen Temperaturen, sowie reduzierenden und/oder oxidierenden Bedingungen, wie sie beispielsweise im Abgastrakt einer Brennkraftmaschine auftreten können, bei gleichzeitiger hoher Empfindlichkeit des Sensorelements gegenüber den zu erfassenden Partikeln, insbesondere den Ruß- und/oder Staubpartikeln.

### Offenbarung der Erfindung

Im Rahmen der vorliegenden Erfindung wird daher ein Sensorelement zur Erfassung von Partikeln eines Messgases in einem Messgasraum gemäß Anspruch vorgeschlagen. Unter einem Sensorelement wird im Rahmen der vorliegenden Erfindung eine beliebige Vorrichtung verstanden, welche geeignet ist, die Partikel qualitativ und/oder quantitativ zu erfassen und welche beispielsweise ein elektrisches Messsignal entsprechend der erfassten Partikel erzeugen kann, wie beispielsweise eine Spannung oder einen Strom.

Das Sensorelement kann insbesondere zum Einsatz in einem Kraftfahrzeug eingerichtet sein. Insbesondere kann es sich bei dem Messgas um ein Abgas des Kraftfahrzeugs handeln. Auch andere Gase und Gasgemische sind grundsätzlich möglich. Bei dem Messgasraum kann es sich grundsätzlich um einen beliebigen, offenen oder geschlossenen Raum handeln, in welchem das Messgas aufgenommen ist und/oder welcher von dem Messgas durchströmt wird. Beispielsweise kann es sich bei dem Messgasraum um einen Abgastrakt einer Brennkraftmaschine, beispielsweise eines Verbrennungsmotors, handeln.

Das Sensorelement umfasst mindestens einen Träger, wobei auf den Träger mindestens eine erste Elektrodeneinrichtung und mindestens eine zweite Elektrodeneinrichtung aufgebracht sind. Die erste Elektrodeneinrichtung und die zweite Elektrodeneinrichtung weisen jeweils mindestens einen Elektrodenfinger auf. Die Elektrodenfinger weisen einen Schichtaufbau auf, wobei der Schichtaufbau mindestens eine erste metallische Schicht und mindestens eine zweite metallische Schicht umfasst.

Unter einem Träger wird im Rahmen der vorliegenden Erfindung grundsätzlich ein beliebiges Substrat verstanden, welches geeignet ist, die erste Elektrodeneinrichtung und die zweite Elektrodeneinrichtung zu tragen, und/oder, auf welches die erste Elektrodeneinrichtung und die zweite Elektrodeneinrichtung aufgebracht werden kann.

Unter Elektrodeneinrichtungen werden im Rahmen der vorliegenden Erfindung grundsätzlich beliebige elektrische Leiter verstanden, die für eine Strommessung und/oder eine Spannungsmessung geeignet sind und/oder welche mindestens ein mit den Elektrodeneinrichtungen in Kontakt stehendes Element mit einer Spannung und/oder einem Strom beaufschlagen können. Unter dem Begriff Elektrodenfinger wird im Rahmen der vorliegenden Erfindung grundsätzlich eine beliebige Ausformung der Elektrodeneinrichtung verstanden, deren Abmessung in einer Dimension die Abmessung in mindestens einer anderen Dimension deutlich überschreitet, beispielsweise mindestens um einen Faktor 2, vorzugsweise mindestens um einen Faktor 3, besonders bevorzugt mindestens um einen Faktor 5. Unter einem Schichtaufbau wird im Rahmen der vorliegenden Erfindung grundsätzlich ein beliebiger Aufbau verstanden, der mindestens zwei Schichten unterschiedlicher Werkstoffe umfasst. Im Rahmen der vorliegenden Erfindung bedeutet metallisch, dass die Struktur aus reinem Metall oder aus einer Legierung oder einem Metall-Keramikverbundwerkstoff hergestellt ist, wobei das Metall einen Massenanteil von über 50 % an dem Metall-Keramikverbundwerkstoff hat.

Das Sensorelement kann mindestens ein elektrisch isolierendes Material umfassen. Insbesondere kann der Träger ein elektrisch isolierendes Material umfassen. Das Sensorelement kann mindestens ein keramisches Material umfassen. Insbesondere kann der Träger mindestens ein keramisches Material umfassen. Der Träger kann eine Trägeroberfläche aufweisen. Unter einer Trägeroberfläche wird im Rahmen der vorliegenden Erfindung grundsätzlich eine beliebige Schicht verstanden, welche den Träger von seiner Umgebung abgrenzt, und auf welche die erste und die zweite Elektrodeneinrichtung des Sensorelements aufgebracht sind.

Die erste Elektrodeneinrichtung und die zweite Elektrodeneinrichtung können jeweils mindestens zwei Elektrodenfinger aufweisen. Die mindestens zwei Elektrodenfinger der ersten Elektrodeneinrichtung und die mindestens zwei Elektrodenfinger der zweiten Elektrodeneinrichtung können ineinander greifen. Insbesondere können die Elektrodenfinger der ersten Elektrodeneinrichtung und die Elektrodenfinger der zweiten Elektrodeneinrichtung kammartig ineinander greifen. Weiterhin kann die erste Elektrodeneinrichtung mit der zweiten Elektrodeneinrichtung eine Struktur aufweisen ausgewählt aus der Gruppe bestehend aus einer Fischgrätstruktur, einer Zickzackstruktur und einer Wickelstruktur.

Die zweite metallische Schicht des Elektrodenfingers bedeckt die erste metallische Schicht des Elektrodenfingers in einer ersten erfindungsgemäßen Alternative vollständig. Insbesondere kann die zweite metallische Schicht einen Rücken und Flanken der ersten metallischen Schicht des Elektrodenfingers vollständig bedecken. Unter einem Rücken der ersten metallischen Schicht des Elektrodenfingers wird im Rahmen der vorliegenden Erfindung grundsätzlich ein Bereich einer Oberfläche der ersten metallischen Schicht des Elektrodenfingers verstanden, wobei der Bereich der Oberfläche parallel zu der Trägeroberfläche verläuft. Unter einer Oberfläche wird im Rahmen der vorliegenden Erfindung grundsätzlich eine beliebige Schicht verstanden, die ein Objekt von seiner Umgebung abgrenzt. Unter einer Flanke der ersten metallischen Schicht des Elektrodenfingers wird im Rahmen der vorliegenden Erfindung eine Verbindungsfläche des Rückens der ersten metallischen Schicht des Elektrodenfingers mit der Trägeroberfläche verstanden.

Die zweite metallische Schicht bedeckt die erste metallische Schicht des Elektrodenfingers in einer zweiten erfindungsgemäßen Alternative nur teilweise. Insbesondere kann die zweite metallische Schicht die erste metallische Schicht nur teilweise bedecken derart, dass die erste metallische Schicht des Elektrodenfingers mindestens eine dem Messgas aussetzbare freie Oberfläche aufweist. Insbesondere kann die zweite metallische Schicht lediglich einen Rücken oder Flanken der ersten metallischen Schicht des Elektrodenfingers bedecken.

Ein Querschnittsprofil des Elektrodenfingers kann rechteckig oder trapezförmig sein. Unter einem Querschnittsprofil des Elektrodenfingers wird im Rahmen der vorliegenden Erfindung ein Umriss des Elektrodenfingers verstanden, welcher senkrecht zu einer hauptsächlichen Erstreckungsrichtung des Elektrodenfingers steht. Beispielsweise kann es sich bei dem Querschnittsprofil um ein Profil in einer Schnittebene handeln, welche senkrecht zur Erstreckungsrichtung des Elektrodenfingers und senkrecht zur Oberfläche des Trägers angeordnet ist.

Die erste metallische Schicht umfasst erfindungsgemäß mindestens ein Material, ausgewählt aus der Gruppe bestehend aus: einem reinen Metall, ausgewählt aus der Gruppe bestehend aus Platin und Palladium; Legierung umfassend mindestens eines der Metalle Platin und Palladium; einem Metall-Keramikverbundwerkstoff, wobei das Metall, ausgewählt aus der Gruppe bestehend aus Platin und Palladium, einen Massenanteil von über 50 % an dem Metall-Keramikverbundwerkstoff hat. Die zweite metallische Schicht umfasst erfindungsgemäß mindestens ein Material, ausgewählt aus der Gruppe bestehend aus: einem reinen Metall, nämlich Rhodium, Iridium oder Rhenium; einer Legierung, umfassend mindestens eines der Metalle Rhodium, Iridium und Rhenium; einem Metall-Keramikverbundwerkstoff, wobei das Metall, ausgewählt aus der Gruppe bestehend aus Rhodium, Iridium und Rhenium, einen Massenanteil von über 50 % am Metall-Keramikverbundwerkstoff hat.

Eine Breite b der ersten metallischen Schicht des Elektrodenfingers kann zwischen 5 µm und 150 µm, bevorzugt zwischen 25 µm und 125 µm und besonders bevorzugt zwischen 50 µm und 100 µm liegen. Unter einer Breite b der ersten metallischen Schicht des Elektrodenfingers wird im Rahmen der vorliegenden Erfindung im Fall des Elektrodenfingers mit rechteckigem Querschnittsprofil eine Ausdehnung der ersten metallischen Schicht des Elektrodenfingers in eine Raumdimension verstanden, welche parallel zu der Trägeroberfläche und senkrecht zu der hauptsächlichen Erstreckungsrichtung des Elektrodenfingers ist. Unter einer Breite b der ersten metallischen Schicht des Elektrodenfingers wird im Rahmen der vorliegenden Erfindung im Fall des Elektrodenfingers mit trapezförmigem Querschnittsprofil die Summe aus zwei Abmessungen e und g verstanden. Dabei ist e eine Ausdehnung des Rückens der ersten metallischen Schicht des Elektrodenfingers in eine Raumdimension, welche parallel zu der Trägeroberfläche und senkrecht zu der hauptsächlichen Erstreckungsrichtung des Elektrodenfingers verläuft. Dabei ist g eine Hälfte einer Differenz zweier Abmessungen f und e. Dabei ist f eine Ausdehnung einer Schichtkontaktfläche der ersten metallischen Schicht des Elektrodenfingers in eine Raumdimension, welche parallel zu der Trägeroberfläche und senkrecht zu der hauptsächlichen Erstreckungsrichtung des Elektrodenfingers ist. Unter einer Schichtkontaktfläche wird im Rahmen der vorliegenden Erfindung grundsätzlich ein Bereich der Oberfläche der ersten metallischen Schicht des Elektrodenfingers verstanden, welche die Trägeroberfläche berührt. Insbesondere kann im Fall des Elektrodenfingers mit trapezförmigem Querschnittsprofil die Abmessung f die Abmessung e überschreiten. Beispielsweise kann es sich bei der Breite b allgemein um eine Breite der ersten metallischen Schicht auf halber Höhe handeln, beispielsweise die so genannte FWHM. Hierbei steht die auch im Deutschen gebräuchliche Abkürzung FWHF für den englischen Ausdruck "full width at half maximum", also für die volle Breite auf halbmaximaler Höhe.

Eine Breite B des Elektrodenfingers kann zwischen 5 µm und 150 µm, bevorzugt zwischen 25 µm und 125 µm und besonders bevorzugt zwischen 50 µm und 110 µm liegen. Unter einer Breite B des Elektrodenfingers wird im Rahmen der vorliegenden Erfindung im Fall des Elektrodenfingers mit rechteckigem Querschnittsprofil eine Ausdehnung des Elektrodenfingers in eine Raumdimension verstanden, welche parallel zu der Trägeroberfläche und senkrecht zu der hauptsächlichen Erstreckungsrichtung des Elektrodenfingers ist. Unter einer Breite B des Elektrodenfingers wird im Rahmen der vorliegenden Erfindung im Fall des Elektrodenfingers mit trapezförmigem Querschnittsprofil die Summe aus zwei Abmessungen h und i verstanden. Dabei ist h eine Ausdehnung des Rückens des Elektrodenfingers in eine Raumdimension, welche parallel zu der Trägeroberfläche und senkrecht zu der hauptsächlichen Erstreckungsrichtung des Elektrodenfingers verläuft. Dabei ist i eine Hälfte einer Differenz zweier Abmessungen k und h. Dabei ist k eine Ausdehnung einer Elektrodenfingerkontaktfläche des Elektrodenfingers in eine Raumdimension, welche parallel zu der Trägeroberfläche und senkrecht zu der hauptsächlichen Erstreckungsrichtung des Elektrodenfingers ist. Unter einer Elektrodenfingerkontaktfläche wird im Rahmen der vorliegenden Erfindung grundsätzlich ein Bereich der Oberfläche der ersten metallischen Schicht des Elektrodenfingers verstanden, welche die Trägeroberfläche berührt. Berührt auch ein Bereich der Oberfläche der zweiten metallischen Schicht des Elektrodenfingers die Trägeroberfläche, dann umfasst die Elektrodenfingerkontaktfläche auch diesen Bereich der zweiten metallischen Schicht des Elektrodenfingers. Insbesondere kann im Fall des Elektrodenfingers mit trapezförmigem Querschnittsprofil die Abmessung k die Abmessung h überschreiten. Beispielsweise kann es sich bei der Breite B allgemein um eine Breite des Elektrodenfingers auf halber Höhe handeln, beispielsweise die so genannte FWHM

Eine Dicke des Elektrodenfingers kann zwischen 0,1 µm und 50 µm, bevorzugt zwischen 1 µm und 30 µm und besonders bevorzugt zwischen 2 µm und 20 µm liegen. Unter einer Dicke eines Objekts wird im Rahmen der vorliegenden Erfindung grundsätzliche eine Abmessung des Objekts verstanden, welche sich senkrecht zu der Trägeroberfläche erstreckt. Eine Dicke der ersten metallischen Schicht kann zwischen 0,1 µm und 50 µm, bevorzugt zwischen 1 µm und 25 µm und besonders bevorzugt zwischen 1,5 µm und 20 µm liegen. Eine Dicke der zweiten metallischen Schicht kann zwischen 0,01 µm und 15 µm, bevorzugt zwischen 0,05 µm und 10 µm und besonders bevorzugt zwischen 0,5 µm und 5 µm liegen. Ein Quotient aus der Dicke des Elektrodenfingers und der Breite B des Elektrodenfingers kann zwischen 0,03 und 0,6, bevorzugt zwischen 0,05 und 0,5 und besonders bevorzugt zwischen 0,2 und 0,4 liegen.

Im Folgenden sind einige bevorzugte Ausführungsbeispiele eines erfindungsgemäßen Sensorelements bezüglich des Materials der ersten metallischen Schicht und der zweiten metallischen Schicht und bezüglich der Dicke der ersten metallischen Schicht und der zweiten metallischen Schicht beschrieben. Grundsätzlich sind jedoch auch beliebige weitere Kombinationen der ersten metallischen Schicht mit der zweiten metallischen Schicht möglich, wobei die erste metallische Schicht und die zweite metallische Schicht jeweils Materialien aufweisen ausgewählt aus den weiter oben bezüglich der ersten metallischen Schicht und bezüglich der zweiten metallischen Schicht definierten Gruppen von Materialien. In einem bevorzugten Ausführungsbeispiel kann die erste metallische Schicht des Sensorelements einen Platin-Keramikverbundwerkstoff umfassen, und die zweite metallische Schicht kann Iridium umfassen. Beispielsweise kann die zweite, Iridium umfassende Schicht in diesem Ausführungsbeispiel eine Dicke von 0,1 µm bis 0,5 µm aufweisen. Weiterhin kann die erste metallische Schicht des Sensorelements einen Platin-Keramikverbundwerkstoff umfassen, und die zweite metallische Schicht kann Rhodium umfassen. Beispielsweise kann die zweite, Rhodium umfassende Schicht in diesem Ausführungsbeispiel eine Dicke von 0,1 µm bis 0,5 µm aufweisen. Insbesondere kann die zweite metallische Schicht eine gleichmäßige Dicke aufweisen. Des Weiteren kann die erste metallische Schicht des Sensorelements einen Platin-Keramikverbundwerkstoff umfassen, und die zweite metallische Schicht des Sensorelements kann Rhenium umfassen.

Beispielsweise kann die zweite, Rhenium umfassende Schicht in diesem Ausführungsbeispiel eine Dicke von 0,1 µm bis 0,9 µm aufweisen. In einer weiteren Ausführungsoption kann die erste metallische Schicht des Sensorelements reines Platin umfassen, und die zweite metallische Schicht des Sensorelements kann Iridium umfassen. Beispielsweise kann die erste, Platin umfassende Schicht in diesem Ausführungsbeispiel eine Dicke von 0,5 µm bis 3,0 µm aufweisen. Weiterhin kann die erste metallische Schicht Palladium umfassen, und die zweite metallische Schicht kann Rhodium umfassen.

Das Sensorelement kann insbesondere als Rußpartikelsensor ausgestaltet sein. Weiterhin kann das Sensorelement in mindestens einem Schutzrohr aufgenommen sein.

In einem weiteren Aspekt der vorliegenden Erfindung wird ein Verfahren zur Herstellung eines Sensorelements gemäß Anspruch 6 vorgeschlagen. Das Verfahren kann, zusätzlich zu den genannten Verfahrensschritten auch weitere Verfahrensschritte umfassen.

Die Verfahrensschritte sind:
a) Bereitstellen mindestens eines Trägers;
b) Aufbringen mindestens einer ersten Elektrodeneinrichtung und mindestens einer zweiten Elektrodeneinrichtung auf den mindestens einen Träger, wobei die erste Elektrodeneinrichtung und die zweite Elektrodeneinrichtung jeweils mindestens einen Elektrodenfinger aufweisen, wobei die Elektrodenfinger einen Schichtaufbau aufweisen, wobei der Schichtaufbau mindestens eine erste metallische Schicht und mindestens eine zweite metallische Schicht aufweist.

Das Verfahren wird zur Herstellung eines Sensorelements gemäß der vorliegenden Erfindung, also gemäß einer der oben genannten Ausführungsformen oder gemäß einer der unten noch näher beschriebenen Ausführungsformen eingesetzt. Dementsprechend kann für Definitionen und optionale Ausgestaltungen weitgehend auf die Beschreibung des Sensorelements verwiesen werden.

Insbesondere kann Schritt b) des Verfahrens die folgenden Teilschritte umfassen:
b1) Aufbringen einer ersten metallischen Schicht; und
b2) Aufbringen einer zweiten metallischen Schicht auf die erste metallische Schicht.

Weiterhin kann Schritt b) des Verfahrens folgenden Teilschritt umfassen:
b3) Einbrennen der zweiten metallischen Schicht.

Des Weiteren können in den Schritten b1) und b2) unterschiedliche Beschichtungsverfahren zum Aufbringen der ersten und der zweiten metallischen Schicht verwendet werden. Beispielsweise kann in Schritt b1) das Aufbringen der ersten metallischen Schicht ein Siebdruckverfahren umfassen. Des Weiteren kann auf den Schritt b1), welcher ein Siebdruckverfahren umfassen kann, ein Sinterprozess folgen.

Des Weiteren kann in Schritt b2) das Aufbringen der zweiten metallischen Schicht durch ein Verfahren ausgewählt aus der Gruppe bestehend aus elektrochemischem oder galvanischem Abscheiden und stromlosem Abscheiden erfolgen. Weiterhin kann in Schritt b1) das Aufbringen der ersten metallischen Schicht als flächige Schicht durch Sputtern oder durch Aufdampfen erfolgen. Insbesondere kann das Aufbringen der ersten metallischen Schicht als flächige Schicht durch Sputtern oder durch Aufdampfen erfolgen, wobei die erste metallische Schicht reines Platin und/oder reines Palladium aufweist. Des Weiteren kann in Schritt b2), alternativ oder zusätzlich zu einem oder mehreren der bereits oben genannten Verfahren, das Aufbringen der zweiten metallischen Schicht als flächige Schicht durch Sputtern oder durch Aufdampfen erfolgen. Insbesondere kann das Aufbringen der zweiten metallischen Schicht als flächige Schicht durch Sputtern oder durch Aufdampfen erfolgen, wobei die zweite metallische Schicht Iridium und/oder Rhenium aufweist. Unter einer flächigen Schicht wird im Rahmen der vorliegenden Erfindung eine Schicht verstanden, welche mindestens einen Bereich der Trägeroberfläche, auf welchen die Elektrodenfinger der ersten und der zweiten Elektrodeneinrichtung aufgebracht sind, bedeckt.

Eine Strukturierung der ersten metallischen Schicht und/oder der zweiten metallischen Schicht zu der ersten und/oder zu der zweiten Elektrodeneinrichtung kann beispielsweise vor, während oder nach dem Abscheiden erfolgen. Beispielsweise kann eine nachträgliche Strukturierung mittels eines Laserstrukturierungsverfahrens erfolgen. Des Weiteren kann nach Schritt b1) eine fotolithografische Strukturierung der ersten metallischen Schicht erfolgen. Insbesondere kann eine flächig aufgebrachte, Palladium umfassende, erste metallische Schicht durch einen fotolithographischen Prozess, beispielsweise eine fotolithographische Reduktion, strukturiert werden. Insbesondere kann eine Palladium-Bekeimung durch eine Belichtung einer Palladium-Vorläuferverbindung, insbesondere durch die Belichtung unter einer Maske, erzeugt werden. Eine fotolithografisch strukturierte erste metallische Schicht, beispielsweise eine Palladium umfassende, fotolithografisch strukturierte erste metallische Schicht, kann mittels galvanischer Abscheidung verstärkt werden. In Schritt b2) kann dann eine zweite metallische Schicht aufgebracht werden, beispielsweise durch galvanische Abscheidung und/oder stromlose Abscheidung. Insbesondere kann auf eine Palladium umfassende, fotolithografisch strukturierte, durch galvanische Abscheidung verstärkte erste metallische Schicht, in Schritt b2) durch galvanische Abscheidung und/oder stromlose Abscheidung eine zweite metallische Schicht aufgebracht werden, beispielsweise eine Rhodium umfassende, zweite metallische Schicht.

Der Träger in Schritt a) kann als Trägerfolie bereitgestellt werden. Die Trägerfolie kann mindestens ein keramisches Material umfassen.

Die vorgeschlagene Vorrichtung und das vorgeschlagene Verfahren weisen gegenüber bekannten Vorrichtungen und Verfahren zahlreiche Vorteile auf. Insbesondere ist eine hohe Robustheit der Elektrodeneinrichtungen eines Sensorelements, insbesondere eine hohe Robustheit einer Außenelektrode, ein wesentliches Schlüsselmerkmal eines hochwertigen Sensorelements, insbesondere eines Partikelsensors, beispielsweise eines Rußpartikelsensors. Im Rahmen der vorliegenden Erfindung können die Elektrodeneinrichtungen über einen Schichtaufbau ausgestaltet werden, insbesondere als mehrlagige Interdigitalelektrode, derart, dass eine erste metallische Schicht, insbesondere eine Leitstruktur, durch eine zweite metallische Schicht, insbesondere eine robuste und abbrandfeste Deckschicht, geschützt werden kann.

Des Weiteren kann der Schichtaufbau, insbesondere ein Schichtkonzept, in vorteilhafter Weise ein für die erste metallische Schicht optimiertes Aufbringverfahren und eine für die erste metallische Schicht optimierte Materialauswahl kombinieren mit einem für die zweite metallische Schicht optimierten Aufbringverfahren und einer für die zweite metallische Schicht optimierten Materialauswahl. Insbesondere kann es möglich sein, durch die vorliegende Erfindung gegenläufige Anforderungen an die Eigenschaften der Elektrodeneinrichtungen, insbesondere an die Eigenschaften der ersten und/oder der zweiten Elektrodeneinrichtung, zu erfüllen.

So kann es beispielsweise möglich sein, eine möglichst feine Elektrodenstruktur, welche insbesondere eine hohe Detektionsempfindlichkeit und/oder eine hohe Genauigkeit des Sensorelements aufweisen kann, zu kombinieren mit einer möglichst hohen Robustheit, insbesondere einer Abgastauglichkeit und/oder einer Abbrandfestigkeit und/oder einer Alterungsbeständigkeit.

Weiterhin kann es möglich sein, die erste metallische Schicht bezüglich einer Feinstrukturierung auf dem Träger, insbesondere auf dem keramischen Träger, zu optimieren, beispielsweise durch eine Metallauswahl und/oder durch das Aufbringverfahren, und/oder die zweite metallische Schicht bezüglich der Abbrandfestigkeit, insbesondere der Abbrandfestigkeit in oxidierendem und/oder reduzierendem Abgas bei Temperaturen bis zu 1250 °C, zu optimieren. Des Weiteren kann die erste metallische Schicht insbesondere derart ausgewählt sein, dass sie möglichst gute Hafteigenschaften auf dem Träger aufweist, insbesondere auf dem keramischen Träger. Weiterhin kann die zweite metallische Schicht insbesondere derart ausgewählt sein, dass sie geeignete katalytische Eigenschaften aufweist, insbesondere geeignete katalytische Eigenschaften bezüglich einer Rußoxidation während einer Regeneration.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine Ausführungsform eines Sensorelements der vorliegenden Erfindung, wobei das Sensorelement in einer Draufsicht gezeigt ist; und
- Figuren 2 bis 7: Verfahrensschritte zweier erfindungsgemäßer Verfahren zur Herstellung eines Sensorelements, wobei verschiedene Elektrodenfinger und verschiedene Zwischenprodukte in einer Querschnittsansicht gezeigt sind.

### Ausführungsformen der Erfindung

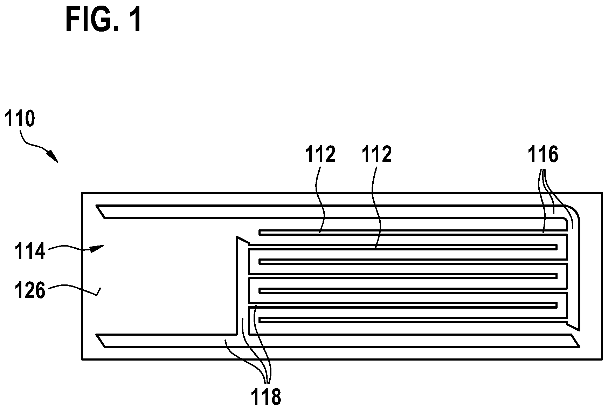

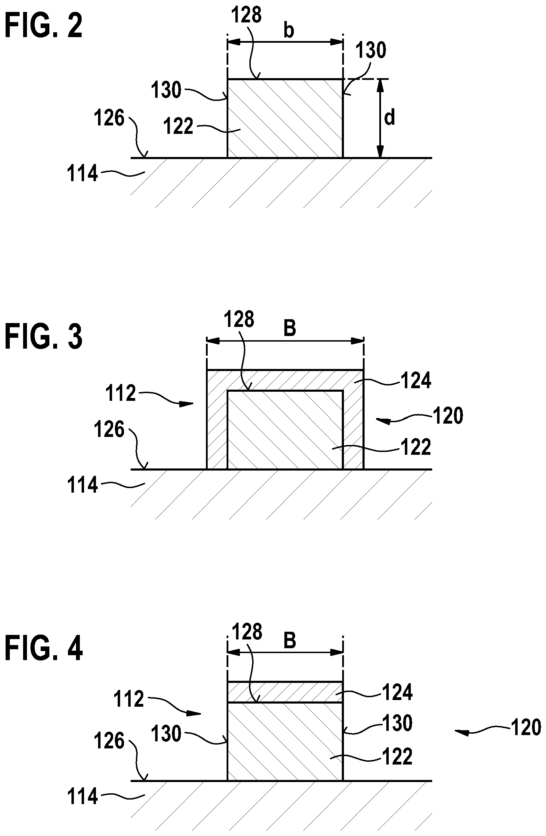

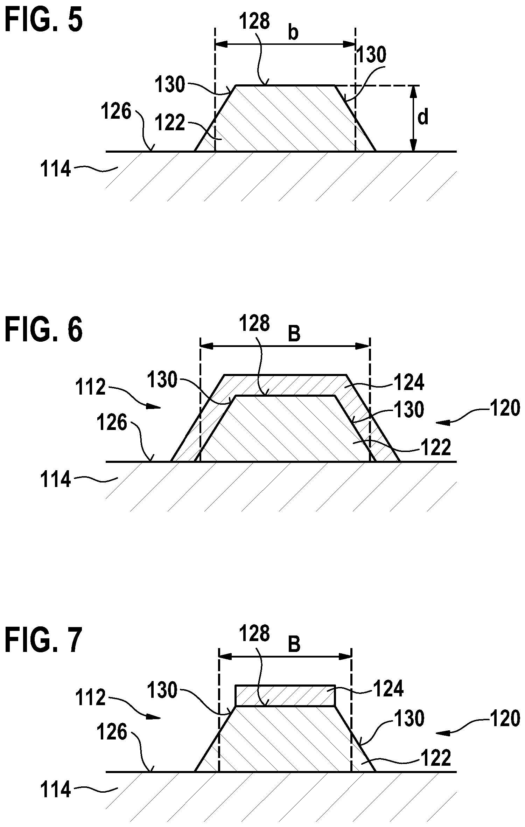

Figur 1 zeigt eine Ausführungsform eines erfindungsgemäßen Sensorelements 110 zur Erfassung von Partikeln eines Messgases in einem Messgasraum in einer Querschnittsansicht. Figuren 2 bis 7 zeigen Verfahrensschritte zweier erfindungsgemäßer Verfahren zur Herstellung eines Sensorelements 110. Die Figuren 3 und 4 zeigen eine Querschnittsansicht von zwei verschiedenen Ausführungsformen eines Elektrodenfingers 112 mit rechteckigem Querschnittsprofil. Die Figuren 6 und 7 zeigen eine Querschnittsansicht von zwei verschiedenen Ausführungsformen des Elektrodenfingers 112 mit trapezförmigem Querschnittsprofil. Figuren 2 und 5 zeigen zwei Zwischenprodukte, ebenfalls in einer Querschnittsansicht. Diese Figuren werden im Folgenden gemeinsam erläutert.

Das Sensorelement 110 kann insbesondere zum Einsatz in einem Kraftfahrzeug eingerichtet sein. Insbesondere kann es sich bei dem Messgas um ein Abgas des Kraftfahrzeugs handeln. Das Sensorelement 110 kann insbesondere ein oder mehrere in den Figuren nicht dargestellte, weitere Funktionselemente umfassen, wie beispielsweise Elektroden, Elektrodenzuleitungen und Kontakte, mehrere Schichten, Heizelemente, elektrochemische Zellen oder andere Elemente, wie beispielsweise in dem oben genannten Stand der Technik gezeigt. Weiterhin kann das Sensorelement 110 beispielsweise in einem ebenfalls nicht dargestellten Schutzrohr aufgenommen sein.

Das Sensorelement 110 umfasst mindestens einen Träger 114, wobei auf den Träger mindestens eine erste Elektrodeneinrichtung 116 und mindestens eine zweite Elektrodeneinrichtung 118 aufgebracht sind. Die erste Elektrodeneinrichtung 116 und die zweite Elektrodeneinrichtung 118 weisen jeweils mindestens einen Elektrodenfinger 112 auf. Die Elektrodenfinger 112 weisen einen Schichtaufbau 120 auf, wobei der Schichtaufbau 120 mindestens eine erste metallische Schicht 122 und mindestens eine zweite metallische Schicht 124 umfasst.

Figur 1 zeigt ein erfindungsgemäßes Sensorelement 110. Das Sensorelement 110 kann mindestens ein keramisches Material umfassen. Insbesondere kann der Träger 114 mindestens ein keramisches Material umfassen. Weiterhin kann der Träger 114 mindestens ein elektrisch isolierendes Material umfassen. Der Träger 114 kann eine Trägeroberfläche 126 aufweisen.

Die erste Elektrodeneinrichtung 116 und die zweite Elektrodeneinrichtung 118 können jeweils zwei oder, wie in Figur 1 gezeigt, jeweils mehr als zwei Elektrodenfinger 112 aufweisen. Wie in Figur 1 dargestellt, können die Elektrodenfinger 112 der ersten Elektrodeneinrichtung 116 und die Elektrodenfinger 112 der zweiten Elektrodeneinrichtung 118 ineinander greifen. Die erste Elektrodeneinrichtung 116 kann aber auch mit der zweiten Elektrodeneinrichtung 118 eine andere Struktur aufweisen. Insbesondere kann die erste Elektrodeneinrichtung 116 mit der zweiten Elektrodeneinrichtung 118 eine Struktur aufweisen ausgewählt aus der Gruppe bestehend aus einer Kammstruktur, einer Fischgrätstruktur, einer Zickzackstruktur und einer Wickelstruktur.

Die Figuren 2 und 5 zeigen zwei verschiedene Ausführungsformen der ersten metallischen Schicht 122 des Elektrodenfingers 112 in einer Querschnittsansicht. Die Figuren 3, 4, 6 und 7 zeigen den Schichtaufbau 120 des Elektrodenfingers 112 ebenfalls in einer Querschnittsansicht. Das Querschnittsprofil eines Elektrodenfingers 112 kann rechteckig sein, wie in den Figuren 3 und 4 gezeigt. Es kann aber auch trapezförmig sein, wie in den Figuren 6 und 7 gezeigt. Der Schichtaufbau 120 umfasst mindestens eine erste metallische Schicht 122 und mindestens eine zweite metallische Schicht 124. Die zweite metallische Schicht 124 des Elektrodenfingers 112 kann die erste metallische Schicht 122 des Elektrodenfingers 112 vollständig bedecken, wie in den Figuren 3 und 6 gezeigt. Insbesondere kann die zweite metallische Schicht 124 des Elektrodenfingers 112 einen Rücken 128 und Flanken 130 der ersten metallische Schicht 122 des Elektrodenfingers 112 bedecken, wie in den Figuren 3 und 6 gezeigt.

Die zweite metallische Schicht 124 des Elektrodenfingers 112 kann die erste metallische Schicht 122 des Elektrodenfingers 112 jedoch auch nur teilweise bedecken. Beispielsweise kann die zweite metallische Schicht 124 lediglich den Rücken 128 der ersten metallischen Schicht 116 des Elektrodenfingers 112 bedecken, wie in den Ausführungsbeispielen in den Figuren 4 und 7 gezeigt.

Die erste metallische Schicht 122 umfasst mindestens ein Material, ausgewählt aus der Gruppe bestehend aus: einem reinen Metall, insbesondere einem reinen Metall ausgewählt aus der Gruppe bestehend aus Platin und Palladium; einer Legierung, insbesondere einer Legierung umfassend mindestens eines der Metalle Platin und/oder Palladium; einem Metall-Keramikverbundwerkstoff, wobei das Metall, insbesondere ein Metall ausgewählt aus der Gruppe bestehend aus Platin und Palladium, einen Massenanteil von über 50 % an dem Metall-Keramikverbundwerkstoff hat. Die zweite metallische Schicht 124 umfasst mindestens ein Material, ausgewählt aus der Gruppe bestehend aus: einem reinen Metall, insbesondere Rhodium, Iridium oder Rhenium; einer Legierung, insbesondere einer Legierung umfassend mindestens eines der Metalle Rhodium, Iridium oder Rhenium; einem Metall-Keramikverbundwerkstoff, wobei das Metall, insbesondere ausgewählt aus der Gruppe bestehend aus Rhodium, Iridium und Rhenium, einen Massenanteil von über 50 % am Metall-Keramikverbundwerkstoff hat.

Eine Breite B des Elektrodenfingers kann zwischen 5 µm und 150 µm, bevorzugt zwischen 25 µm und 125 µm und besonders bevorzugt zwischen 50 µm und 110 µm liegen. Eine Breite b der ersten metallischen Schicht 122 eines Elektrodenfingers 112 kann zwischen 5 µm und 150 µm, bevorzugt zwischen 25 µm und 125 µm und besonders bevorzugt zwischen 50 µm und 100 µm liegen. Eine Dicke des Elektrodenfingers 112 kann zwischen 0,1 µm und 50 µm, bevorzugt zwischen 1 µm und 30 µm und besonders bevorzugt zwischen 2 µm und 20 µm liegen. Eine Dicke d der ersten metallischen Schicht 122 kann zwischen 0,1 µm und 50 µm, bevorzugt zwischen 1 µm und 25 µm und besonders bevorzugt zwischen 1,5 µm und 20 µm liegen. Eine Dicke der zweiten metallischen Schicht 124 kann zwischen 0,01 µm und 15 µm, bevorzugt zwischen 0,05 µm und 10 µm und besonders bevorzugt zwischen 0,5 µm und 5 µm liegen. Ein Quotient aus der Dicke des Elektrodenfingers 112 und der Breite B des Elektrodenfingers 112 kann zwischen 0,03 und 0,6, bevorzugt zwischen 0,05 und 0,5 und besonders bevorzugt zwischen 0,2 und 0,4 liegen.

in einem weiteren Aspekt der vorliegenden Erfindung wird ein Verfahren zur Herstellung eines Sensorelements 110 zur Erfassung von Partikeln eines Messgases in einem Messgasraum vorgeschlagen. Die Figuren 2 und 5 zeigen Zwischenprodukte des Verfahrens zur Herstellung des Sensorelements 110 in Form von zwei Ausführungsvarianten der ersten metallischen Schicht 122. Das Verfahren kann das Aufbringen der ersten metallischen Schicht 122 umfassen. Weiterhin kann das Verfahren das Aufbringen der zweiten metallischen Schicht 124 auf die erste metallische Schicht 122 umfassen. Insbesondere können unterschiedliche Verfahren zum Aufbringen der ersten metallischen Schicht 122 und zum Aufbringen der zweiten metallischen Schicht 124 verwendet werden. Beispielsweise kann das Aufbringen der ersten metallischen Schicht 122 ein Siebdruckverfahren umfassen. Beispielsweise kann das Aufbringen der zweiten metallischen Schicht 124 durch ein Verfahren ausgewählt aus der Gruppe bestehend aus galvanischem Abscheiden und stromlosem Abscheiden erfolgen.

## Patentansprüche

1. Sensorelement (110) zur Erfassung von Partikeln eines Messgases in einem Messgasraum, wobei das Sensorelement (110) mindestens einen Träger (114) umfasst, wobei auf den Träger (114) mindestens eine erste Elektrodeneinrichtung (116) und mindestens eine zweite Elektrodeneinrichtung (118) aufgebracht sind, wobei die erste Elektrodeneinrichtung (116) und die zweite Elektrodeneinrichtung (118) jeweils mindestens einen Elektrodenfinger (112) aufweisen, wobei die Elektrodenfinger (112) einen Schichtaufbau (120) aufweisen, wobei der Schichtaufbau (120) mindestens eine erste metallische Schicht (122) umfasst, die mindestens ein Material umfasst ausgewählt aus der Gruppe bestehend aus: einem reinen Metall ausgewählt aus der Gruppe bestehend aus Platin und Palladium; einer Legierung, umfassend mindestens eines der Metalle Platin und/oder Palladium; einem Metall-Keramikverbundwerkstoff, wobei das Metall, ausgewählt aus der Gruppe bestehend aus Platin und Palladium, einen Massenanteil von über 50 % an dem Metall-Keramikverbundwerkstoff hat; und der Schichtaufbau mindestens eine zweite metallische Schicht (124) umfasst, die die erste metallische Schicht vollständig oder teilweise bedeckt, **dadurch gekennzeichnet, dass** die zweite metallische Schicht (124) mindestens ein Material umfasst ausgewählt aus der Gruppe bestehend aus: einem reinen Metall, nämlich Rhodium, Iridium oder Rhenium; einer Legierung umfassend mindestens eines der Metalle Rhodium, Iridium oder Rhenium; einem Metall-Keramikverbundwerkstoff, wobei das Metall, ausgewählt aus der Gruppe bestehend aus Rhodium, Iridium und Rhenium, einen Massenanteil von über 50 % an dem Metall-Keramikverbundwerkstoff hat.

2. Sensorelement (110) nach dem vorhergehenden Anspruch, wobei die erste Elektrodeneinrichtung (116) und die zweite Elektrodeneinrichtung (118) jeweils mindestens zwei Elektrodenfinger (112) aufweisen.

3. Sensorelement (110) nach einem der vorhergehenden Ansprüche, wobei eine Dicke der ersten metallischen Schicht (122) in einem Bereich von 0,1 µm bis 50 µm liegt.

4. Sensorelement (110) nach einem der vorhergehenden Ansprüche, wobei eine Dicke der zweiten metallischen Schicht (124) in einem Bereich von 0,01 µm bis 15 µm liegt.

5. Sensorelement (110) nach einem der vorhergehenden Ansprüche, wobei ein Quotient aus einer Dicke des Elektrodenfingers (112) und einer Breite des Elektrodenfingers (112) in einem Bereich von 0,03 bis 0,6 liegt.

6. Verfahren zur Herstellung eines Sensorelements (110) nach einem der vorhergehenden Ansprüche, wobei das Verfahren die folgenden Schritte umfasst:
a) Bereitstellen mindestens eines Trägers (114);
b) Aufbringen mindestens einer ersten Elektrodeneinrichtung (116) und mindestens einer zweiten Elektrodeneinrichtung (118) auf den mindestens einen Träger (114), wobei die erste Elektrodeneinrichtung (116) und die zweite Elektrodeneinrichtung (118) jeweils mindestens einen Elektrodenfinger (112) aufweisen, wobei die Elektrodenfinger (112) einen Schichtaufbau (120) aufweisen, wobei der Schichtaufbau (120) mindestens eine erste metallische Schicht (122) und mindestens eine zweite metallische Schicht (124) aufweist.

7. Verfahren nach dem vorhergehenden Anspruch, wobei Schritt b) die folgenden Teilschritte umfasst:
b1) Aufbringen einer ersten metallischen Schicht (122); und
b2) Aufbringen einer zweiten metallischen Schicht (124) auf die erste metallische Schicht (122).

8. Verfahren nach dem vorhergehenden Anspruch, wobei Schritt b) weiterhin folgenden Teilschritt umfasst:
b3) Einbrennen der zweiten metallischen Schicht (124).

9. Verfahren nach einem der beiden vorhergehenden Ansprüche, wobei in den Schritten b1) und b2) unterschiedliche Beschichtungsverfahren zum Aufbringen der ersten metallischen Schicht (122) und der zweiten metallischen Schicht (124) verwendet werden.

## Claims

1. Sensor element (110) for detecting particles of a measurement gas in a measurement gas space, wherein the sensor element (110) comprises at least one support (114), wherein at least one first electrode device (116) and at least one second electrode device (118) are applied to the support (114), wherein the first electrode device (116) and the second electrode device (118) each have at least one electrode finger (112), wherein the electrode fingers (112) have a layer construction (120), wherein the layer construction (120) comprises at least one first metallic layer (122) comprising at least one material selected from the group consisting of: a pure metal selected from the group consisting of platinum and palladium; an alloy comprising at least one of the metals platinum and/or palladium; a metal-ceramic composite material, wherein the metal, selected from the group consisting of platinum and palladium, has a proportion by mass of more than 50% in the metal-ceramic composite material; and the layer construction comprises at least one second metallic layer (124) that completely or partially covers the first metallic layer, **characterized in that** the second metallic layer (124) comprises at least one material selected from the group consisting of: a pure metal, namely rhodium, iridium or rhenium; an alloy comprising at least one of the metals rhodium, iridium or rhenium; a metal-ceramic composite material, wherein the metal, selected from the group consisting of rhodium, iridium and rhenium, has a proportion by mass of more than 50% in the metal-ceramic composite material.

2. Sensor element (110) according to the preceding claim, wherein the first electrode device (116) and the second electrode device (118) each have at least two electrode fingers (112).

3. Sensor element (110) according to either of the preceding claims, wherein a thickness of the first metallic layer (122) is in a range from 0.1 um to 50 µm.

4. Sensor element (110) according to any of the preceding claims, wherein a thickness of the second metallic layer (124) is in a range from 0.01 um to 15 µm.

5. Sensor element (110) according to any of the preceding claims, wherein a quotient of a thickness of the electrode finger (112) and a width of the electrode finger (112) is in a range from 0.03 to 0.6.

6. Method for producing a sensor element (110) according to any of the preceding claims, wherein the method comprises the following steps:
a) providing at least one support (114);
b) applying at least one first electrode device (116) and at least one second electrode device (118) to the at least one support (114), wherein the first electrode device (116) and the second electrode device (118) each have at least one electrode finger (112), wherein the electrode fingers (112) have a layer construction (120), wherein the layer construction (120) has at least one first metallic layer (122) and at least one second metallic layer (124).

7. Method according to the preceding claim, wherein step b) comprises the following substeps:
b1) applying a first metallic layer (122); and
b2) applying a second metallic layer (124) to the first metallic layer (122).

8. Method according to the preceding claim, wherein step b) further comprises the following substep:
b3) baking the second metallic layer (124).

9. Method according to either of the two preceding claims, wherein different coating processes are used in steps b1) and b2) for applying the first metallic layer (122) and the second metallic layer (124).

## Revendications

1. Élément capteur (110) destiné à détecter des particules d'un gaz de mesure dans un espace gazeux de mesure, l'élément capteur (110) comprenant au moins un support (114), au moins un premier dispositif d'électrode (116) et au moins un deuxième dispositif d'électrode (118) étant appliqués sur le support (114), le premier dispositif d'électrode (116) et le deuxième dispositif d'électrode (118) présentant à chaque fois au moins un doigt d'électrode (112), les doigts d'électrode (112) présentant une structure stratifiée (120), la structure stratifiée (120) comprenant au moins une première couche métallique (122) qui comprend au moins un matériau choisi dans le groupe constitué par : un métal pur choisi dans le groupe constitué par le platine et le palladium ; un alliage comprenant au moins l'un des métaux platine et/ou palladium ; un matériau composite métal-céramique, le métal, choisi dans le groupe constitué par le platine et le palladium, présentant une proportion massique supérieure à 50% par rapport au matériau composite métal-céramique ; et la structure stratifiée comprenant au moins une deuxième couche métallique (124), qui recouvre complètement ou partiellement la première couche métallique, **caractérisé en ce que** la deuxième couche métallique (124) comprend au moins un matériau choisi dans le groupe constitué par : un métal pur, à savoir le rhodium, l'iridium ou le rhénium ; un alliage comprenant au moins l'un des métaux rhodium, iridium ou rhénium ; un matériau composite métal-céramique, le métal, choisi dans le groupe constitué par le rhodium, l'iridium et le rhénium, présentant une proportion massique supérieure à 50% par rapport au matériau composite métal-céramique.

2. Élément capteur (110) selon la revendication précédente, le premier dispositif d'électrode (116) et le deuxième dispositif d'électrode (118) présentant à chaque fois au moins deux doigts d'électrode (112).

3. Élément capteur (110) selon l'une des revendications précédentes, une épaisseur de la première couche métallique (122) se situant dans une plage de 0,1 um à 50 um.

4. Élément capteur (110) selon l'une des revendications précédentes, une épaisseur de la deuxième couche métallique (124) se situant dans une plage de 0,01 um à 15 µm.

5. Élément capteur (110) selon l'une des revendications précédentes, un quotient d'une épaisseur du doigt d'électrode (112) et d'une largeur du doigt d'électrode (112) se situant dans une plage de 0,03 à 0,6.

6. Procédé pour la préparation d'un élément capteur (110) selon l'une des revendications précédentes, le procédé comprenant les étapes suivantes :
a) mise à disposition d'au moins un support (114) ;
b) application d'au moins un premier dispositif d'électrode (116) et d'au moins un deuxième dispositif d'électrode (118) sur ledit au moins un support (114), le premier dispositif d'électrode (116) et le deuxième dispositif d'électrode (118) présentant à chaque fois au moins un doigt d'électrode (112), les doigts d'électrode (112) présentant une structure stratifiée (120), la structure stratifiée (120) présentant au moins une première couche métallique (122) et au moins une deuxième couche métallique (124).

7. Procédé selon la revendication précédente, l'étape b) comprenant les étapes partielles suivantes :
b1) application d'une première couche métallique (122) ; et
b2) application d'une deuxième couche métallique (124) sur la première couche métallique (122).

8. Procédé selon la revendication précédente, l'étape b) comprenant en outre l'étape partielle suivante :
b3) calcination de la deuxième couche métallique (124).

9. Procédé selon l'une des deux revendications précédentes, différents procédés de revêtement, destinés à appliquer la première couche métallique (122) et la deuxième couche métallique (124), étant utilisés dans les étapes b1) et b2) .
